# FASCICULE DE BREVET EUROPEEN

(11) **EP 0 911 566 B1**
(45) Date de publication et mention de la délivrance du brevet: **02.05.2003**
(21) Numéro de dépôt: 98420177.2
(22) Date de dépôt: 08.10.1998
(51) Int. Cl.: F16L 37/38, F16L 37/40, F16L 37/42

(54) **Dispositif de connexion rapide**
Schnellkupplungsvorrichtung
Quick-acting coupling

(30) Priorité: 14.10.1997 FR 9713075
(43) Date de publication de la demande: 28.04.1999
(73) Titulaire: COMAP, F-69008 Lyon (FR)
(72) Inventeur: Tuffe, Stéphane, 69740 Genas (FR); Col, Hervé, 63910 Vertaizon (FR)
(74) Mandataire: Maureau, Philippe

(56) Documents cités:
- EP-A- 0 184 799
- CH-A- 323 097
- GB-A- 2 134 612

## Description

La présente invention concerne un dispositif de connexion rapide pour le raccordement de deux conduites destinées à transporter un fluide sous pression, par exemple du gaz naturel, une extrémité de conduite étant munie d'un embout mâle et l'autre d'un coupleur femelle.

Des appareils fonctionnant au gaz, tels par exemple une cuisinière ou une chaudière ont souvent une application domestique. Un tel appareil est habituellement alimenté en gaz par une conduite munie d'un robinet. Un tuyau est raccordé sur l'appareil et son extrémité libre vient se connecter à une extrémité d'une conduite de gaz munie d'un robinet.

La connexion et déconnexion du tuyau est une opération qui est longue et qui nécessite un certain outillage. L'extrémité libre du tuyau est emmanchée sur l'extrémité de la conduite et divers composants à visser permettent d'assurer l'étanchéité.

Pour simplifier cette procédure de connexion et rendre la connexion réalisée plus fiable, il est connu d'utiliser un dispositif de connexion rapide. Avec un tel dispositif, il suffit d'introduire un embout mâle monté à l'extrémité libre du tuyau de l'appareil dans un coupleur femelle alimenté en gaz. La connexion/déconnexion devient alors presqu'aussi simple que lorsqu'il s'agit de brancher/débrancher un appareil électrique en introduisant/retirant une fiche d'une prise de courant.

Un tel dispositif est décrit par exemple dans le document EP 0 754 899. On a là un raccord rapide formé par un élément tubulaire qui est relié à une conduite et qui présente un siège dans lequel peut être introduit un embout d'un tuyau d'un appareil à connecter. Une soupape d'arrêt est associée à l'entrée du raccord rapide.

Pour des raisons de sécurité, il est prévu de pouvoir interrompre l'alimentation en gaz de l'appareil, même lorsque ce dernier est connecté à l'alimentation en gaz. Il est alors connu de placer un robinet juste en amont du connecteur rapide. Un tel robinet se retrouve par exemple dans le document EP 0 754 899 cité précédemment.

Le dispositif de connexion ainsi réalisé est un dispositif encombrant et d'un prix de revient élevé. En effet, le nombre de pièces est important et beaucoup d'entre elles doivent être usinées avec précision pour obtenir une bonne étanchéité d'une part au niveau de la soupape d'arrêt et d'autre part au niveau du robinet.

La présente invention a alors pour but de fournir un dispositif de connexion rapide permettant la coupure de l'alimentation en position connectée qui soit de conception simple et de ce fait présente un prix de revient moins élevé que les dispositifs connus de l'art antérieur.

À cet effet, le dispositif de connexion rapide qu'elle propose est un dispositif de connexion rapide selon la revendication 1.

Selon l'invention, la soupape comporte deux parties, une première partie coulissant dans l'élément tubulaire et sur laquelle agit l'embout et une seconde partie formant la soupape proprement dite montée coaxialement à la première partie, des moyens élastiques étant prévus entre les première et seconde parties de la soupape ; les moyens élastiques agissant pour fermer la soupape ont une raideur moindre par rapport aux moyens élastiques placés entre les parties de la soupape, et des moyens de commande mécaniques, qui sont manoeuvrés depuis l'extérieur du dispositif, sont aptes à provoquer le déplacement de la seconde partie de la soupape vers la première partie de façon à assurer la fermeture de la soupape.

Ainsi, il devient inutile de monter un robinet. La soupape peut être ouverte quand un embout est introduit dans le dispositif, et grâce aux moyens de commande mécaniques, la soupape peut être refermée même lorsque l'embout est encore engagé. Ceci est possible grâce à la conception en deux parties de la soupape.

Lorsque l'embout est introduit dans le dispositif, il vient agir, de préférence directement, sur la première partie de la soupape, qui est déplacée dans le sens d'introduction de l'embout. Ce mouvement est transmis à la seconde partie de la soupape, par l'intermédiaire des moyens élastiques placés entre les deux parties. Etant donné que ces derniers ont une raideur supérieure aux moyens élastiques agissant dans le sens de la fermeture de la soupape qui sont comprimés et ainsi la soupape s'ouvre.

Lorsque la soupape est ouverte, l'embout étant introduit dans le dispositif, en agissant sur les moyens de commande mécaniques, la seconde partie de la soupape est déplacée, tandis que la première, précontrainte par les moyens élastiques entre les deux parties de la soupape et en butée contre l'embout, ne bouge pas. Le déplacement de la seconde partie de la soupape s'accompagne donc d'une compression des moyens élastiques placés entre les deux parties de la soupape. Cette compression permet de faire revenir la seconde partie de la soupape en position ouverte lorsqu'on agit en sens inverse sur les moyens de commande mécaniques.

De préférence, les moyens élastiques sont des ressorts hélicoïdaux.

Dans une première forme de réalisation, la seconde partie de la soupape présente une forme cylindrique tubulaire fermée à une extrémité et la première partie de la soupape coulisse à l'intérieur de la seconde partie de la soupape, le bord libre circulaire de la seconde partie de la soupape coopérant avec un siège de soupape solidaire de l'élément tubulaire.

Il peut également être prévu que la première partie de la soupape présente une forme cylindrique comportant des lumières dans sa paroi, coulisse dans l'élément tubulaire et dans la seconde partie de la soupape.

Les moyens de commande mécaniques peuvent par exemple comporter une came pivotant autour d'un axe perpendiculaire à la direction de déplacement de la soupape. Bien entendu, d'autres moyens sont tout à fait envisageables. Ainsi, par exemple, un simple poussoir pourrait remplacer la came.

Pour avoir une connexion fiable de l'embout dans le dispositif, ce dernier comporte avantageusement un dispositif d'encliquetage pour maintenir l'embout de tuyau connecté.

Ce dispositif d'encliquetage comporte par exemple une bague extérieure coulissant sur l'élément tubulaire, précontrainte par un ressort et une cage dans laquelle sont placées des billes, ainsi qu'une bague interne coulissante par rapport à l'élément tubulaire et dont la position est commandée par l'introduction ou le retrait de l'embout.

Il peut alors être prévu un mécanisme à baïonnette permettant le verrouillage de la bague extérieure. Ce mécanisme est une garantie contre les déconnexions involontaires de l'embout.

Dans une forme de réalisation, le dispositif de connexion rapide selon l'invention comporte en outre un boîtier destiné à être fixé à une paroi. On retrouve alors pour une application domestique un boîtier qui pour le gaz domestique est l'équivalent d'une prise de courant pour le domaine électrique.

De toute façon, l'invention sera bien comprise à l'aide de la description qui suit, en référence au dessin schématique annexé, représentant à titre d'exemples non limitatifs deux formes d'exécution d'un dispositif de connexion rapide selon l'invention.
Figure 1 en est une vue en coupe longitudinale, aucun embout n'étant introduit,
Figure 2 correspond à la figure 1, un embout étant introduit dans le dispositif, l'alimentation étant ouverte,
Figure 3 correspond à la figure 2, l'alimentation étant fermée, et
Figure 4 représente une variante d'exécution dans la position représentée à la figure 2.

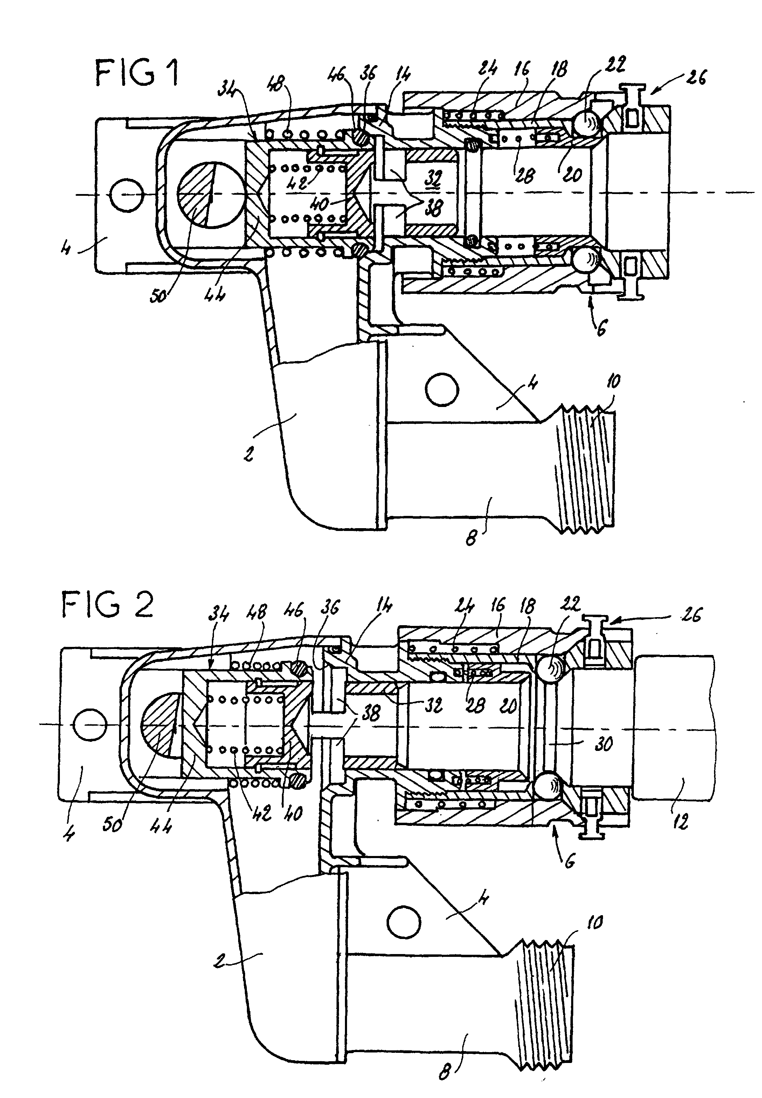

Les figures 1 à 3 montrent un dispositif de connexion rapide destiné à être fixé sur un mur. Ce dispositif comporte un boîtier 2 muni de pattes de fixation 4, un coupleur 6 avec son système obturateur.

Le boîtier 2 est par exemple une pièce moulée en matière synthétique. Elle comporte une arrivée 8 munie d'un filetage 10. Cette arrivée 8 est destinée à être raccordée à une conduite de gaz (non représentée) telle qu'elle existe généralement dans une habitation. Le raccord réalisé au niveau de l'arrivée 8 peut être démontable, mais il n'est pas destiné à être démonté.

Dans l'exemple de réalisation, l'arrivée 8 est parallèle au coupleur 6. Toutes les autres positions relatives entre cette arrivée 8 et ce coupleur 6 sont envisageables pour s'adapter à une situation donnée, sans sortir du cadre de l'invention.

Le coupleur 6 est destiné à recevoir un embout mâle 12 et est équipé d'un dispositif à encliquetage pour maintenir l'embout 12, une fois ce dernier en place dans le coupleur.

Le coupleur comporte un élément tubulaire 14, une bague extérieure 16, une cage 18 et une bague intérieure 20.

La cage 18 est de forme sensiblement cylindrique circulaire. Elle comporte des logements destinés à recevoir chacun une bille 22. Deux billes sont représentées. Bien entendu, il peut y en avoir plus. Elles sont de préférence régulièrement réparties à la périphérie de la cage.

La bague extérieure 16 est montée coulissante sur la cage 18. Lorsque l'embout 12, appelé aussi coiffe, n'est pas connecté, une surface inclinée de la bague 16 se trouve au niveau des billes 22. Un ressort 24 agit sur la bague extérieure 16, de manière à précontraindre les billes 22 vers l'intérieur, en coopération avec la surface inclinée.

Un système à baïonnette 26 permet le verrouillage et déverrouillage de la bague extérieure 16 par rapport à la cage 18.

La bague intérieure 20 est coulissante par rapport à la cage 18. Elle est mobile entre une position (figure 1) où elle est face aux billes 22 et une position effacée vers l'intérieur du coupleur 6 libérant les billes 22. Un ressort 28 précontraint la bague intérieure 20 dans la position face aux billes 22. Le ressort 28 prend appui sur l'élément tubulaire 14 et la bague extérieure 20 forme un prolongement de cet élément 14.

L'embout 12 présente une extrémité tubulaire cylindrique dont le diamètre extérieur correspond sensiblement au diamètre intérieur de l'élément tubulaire 14 et de la bague intérieure 20. Puis elle présente un épaulement et une partie de diamètre extérieur plus important. Une rainure périphérique 30 est réalisée au niveau de cette partie plus grande. Elle est destinée à recevoir les billes 22.

Ainsi, lorsque l'embout 12 est introduit dans le coupleur 6, l'extrémité de l'embout vient glisser dans la bague intérieure 20 et l'élément tubulaire 14. Puis l'épaulement vient en butée contre la bague intérieure 20 qui est poussée à l'encontre du ressort 28. Les billes 22 sont libérées et sous la contrainte du ressort 24, elles sont poussées dans la rainure 30. Un verrouillage supplémentaire peut être réalisé à l'aide du système à baïonnette 24.

Pour ressortir l'embout 12, il faut éventuellement déverrouiller le système à baïonnette 24 et ensuite pousser la bague extérieure 16 à l'encontre du ressort 24, de manière à amener la surface inclinée face aux billes 22. L'embout 12 peut alors être retiré. Grâce au ressort 28, la bague intérieure 20 "suit" l'embout et vient reprendre sa place initiale, empêchant les billes 22 de quitter la cage 18.

Du côté opposé au coupleur 6, l'élément tubulaire 14 est équipé d'un dispositif obturateur qui comporte une soupape en deux parties 32 et 34 et un siège de soupape 36.

La première partie 32 de la soupape est une pièce cylindrique circulaire, dont le diamètre extérieur correspond sensiblement au diamètre intérieur de l'élément tubulaire 14, dans lequel elle coulisse. Elle présente des lumières 38 réalisées dans sa paroi périphérique, ainsi qu'une paroi de fond 40 qui n'est pas forcément comme le montrent les figures à une extrémité de la première partie de la soupape. Par rapport au fond 40, les lumières 38 se trouvent du côté du coupleur 6. Un ressort 42, appelé ci-après "premier ressort" correspondant à la première partie 32 de la soupape, agit sur la première partie 32 en la poussant vers le coupleur 6, c'est-à-dire dans sa position "fermée".

En position fermée de la première partie 32 de la soupape, les lumières 38 sont partiellement obturées par l'élément tubulaire 14.

La seconde partie 34 de la soupape forme la soupape proprement dite. Elle est de forme tubulaire cylindrique, présente un fond 44, ainsi qu'un bord libre annulaire sur lequel est monté un joint d'étanchéité 46 et qui coopère avec le siège de soupape 36. Les deux parties 32, 34 de la soupape se déplacent coaxialement à l'axe de l'élément tubulaire 14 et du coupleur 6. Un second ressort 48, appelé ainsi car agissant sur la seconde partie 34 de la soupape, agit dans le sens de fermeture de la soupape et contraint donc la seconde partie 34 vers le siège de soupape 36. Ce dernier est réalisé sur l'extrémité de l'élément tubulaire 14 opposé au coupleur 6.

Le second ressort 48 a une raideur moindre que celle du premier ressort 42, qui prend appui d'une part sur le fond 40 de la première partie 32 et le fond 44 de la seconde partie 34.

Lorsque l'embout 12 pénètre dans le coupleur 6, avant d'arriver à sa position encliquetée, il vient entraîner dans un mouvement la première partie 32 de la soupape. Les lumières 38 ne sont pas recouvertes par la paroi interne de l'élément tubulaire. Le premier ressort 42 monté entre les deux parties 32, 34 transmet le mouvement à la seconde partie 34 de la soupape et c'est le second ressort 48 qui se comprime, compte tenu des raideurs respectives des ressorts (figure 2). L'introduction de l'embout 12 permet donc l'ouverture de la soupape.

Lorsque l'embout 12 est ensuite retiré du coupleur 6, les ressorts 42 et 48 agissent dans le sens de la fermeture de la soupape. La seconde partie 34 de la soupape et son joint 46 viennent alors assurer la fermeture du dispositif d'obturation. Les lumières 38 ne sont pas forcément entièrement recouvertes par l'élément tubulaire 14. Elles remplissent essentiellement une fonction de passage du fluide et la première partie 32 de la soupape n'a pas de fonction d'obturation.

Le dispositif selon l'invention est également muni d'une came 50. Cette dernière est montée pivotante autour d'un axe perpendiculaire à l'axe de déplacement de la soupape.

La came 50 présente une forme semi-cylindrique circulaire. Elle est reliée par un axe cylindrique à une poignée (non représentée) se trouvant à l'extérieur du boîtier 2.

La came 50 agit sur le fond 44 de la seconde partie 34 de la soupape. Elle est telle qu'elle puisse induire un déplacement de la seconde partie 34 correspondant à la course maximale de la seconde partie 34, c'est-à-dire la course entre la position fermée (figure 1) et la position entièrement ouverte (figure 2). La came étant semi-cylindrique circulaire, le rayon de la came correspond au moins à cette course.

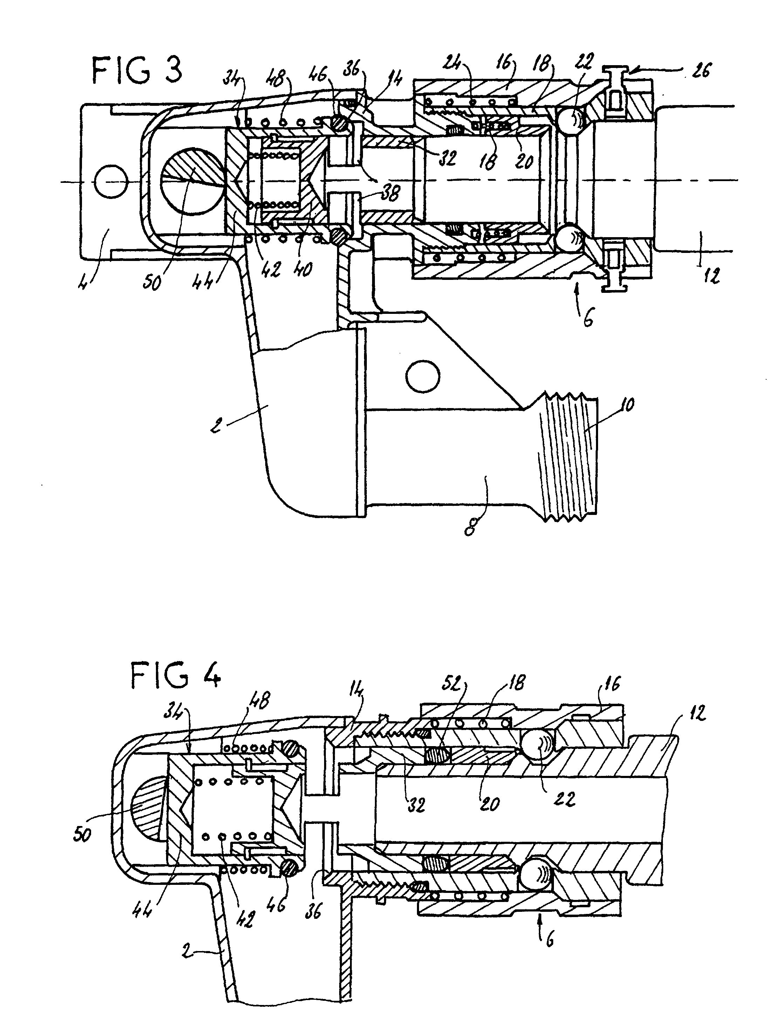

En agissant sur la came 50, il est possible de garantir la position fermée du dispositif d'obturation qu'un embout 12 soit ou non engagé dans le coupleur 6. La figure 3 montre le cas d'un embout 12 engagé dans le coupleur 6 et d'un dispositif d'obturation en position fermée.

La came 50 vient à cet effet agir sur la seconde partie 34 de la soupape, en contraignant celle-ci à venir contre le siège de soupape 36. La première partie 32 de la soupape ne peut pas bouger, car elle est en butée contre l'embout 12 et contrainte contre cet embout 12 par le premier ressort 42. La seconde partie 34 de la soupape vient donc en appui sur le siège de soupape 36 en comprimant le premier ressort 42.

On constate que lorsque la came 50 contraint la seconde partie 34 de la soupape à venir en appui sur le siège de soupape 36, le dispositif d'obturation est fermé, quelle que soit la position de l'embout 12 (engagé ou désengagé).

La came 50 permet donc de remplir les mêmes fonctions qu'un robinet placé en amont du flux de gaz par rapport à la soupape. Extérieurement, la présentation est semblable à celle d'un robinet. Toutefois, le prix de revient de cette came est très sensiblement inférieur à celui d'un robinet.

L'encombrement de la came est aussi nettement moindre que celui d'un robinet. Il est alors possible d'avoir un dispositif de connexion d'encombrement réduit.

Le dispositif décrit ci-dessus permet de garantir qu'en l'absence d'embout, le dispositif d'obturation est fermé et il autorise également de couper le flux de gaz lorsqu'un embout est engagé dans le coupleur.

La figure 4 montre une variante de réalisation. Dans cette variante, la première pièce de la soupape 32 coopère avec le coupleur 6 et un ressort, le ressort 28, peut être supprimé.

Dans cette forme de réalisation, la cage 18 pour les billes 22 et l'élément tubulaire 14 sont solidaires (comme sur les figures 1 à 3) et présentent un même diamètre intérieur. La bague intérieure 20 et une zone de la première partie 32 de la soupape ont donc un même diamètre extérieur. Un joint d'étanchéité 52 sépare ces deux pièces.

Sur la figure 4, le premier ressort 42 peut aussi agir sur la bague intérieure 20. Il repositionne cette dernière pour empêcher aux billes 22 de s'échapper lorsque l'embout 12 est retiré.

Dans cette forme de réalisation, l'embout 12 agit à la fois sur la première partie 32 de la soupape et sur la bague intérieure 20. Ces deux pièces sont conformées en fonction de la géométrie de l'embout 12.

Bien entendu, l'invention ne se limite pas aux formes de réalisation décrites ci-dessus à titre d'exemples non limitatifs ; elle en embrasse au contraire toutes les variantes décrites dans les revendications.

Ainsi, par exemple, il est possible de remplacer la came agissant sur la soupape par un poussoir se déplaçant coaxialement par rapport à la soupape, ou par une tige filetée venant appuyer sur la seconde partie de la soupape.

Un autre type de coupleur peut être utilisé, par exemple dans lequel les billes sont remplacées par les lames élastiques.

La forme de la soupape peut être différente. La seconde partie de la soupape pourrait être un clapet comportant une tige s'étendant vers le coupleur, la première partie étant guidée sur la tige avec interposition d'un ressort entre la première partie et le clapet.

Les ressorts hélicoïdaux pourraient être remplacés par d'autres moyens élastiques, par exemple des lames ou rondelles élastiques, bien que le ressort constitue le moyen élastique préféré de cette invention.

## Revendications

1. Dispositif de connexion rapide comportant un élément tubulaire (14) destiné à recevoir un embout (12) d'un tuyau ou similaire à raccorder, et une soupape (32,34) précontrainte par des moyens élastiques (48) en position fermée et dont le déplacement est commandé par l'introduction et le retrait de l'embout (12) de tuyau dans l'élément tubulaire (14),
**caractérisé en ce que** la soupape comporte deux parties, une première partie (32) coulissant dans l'élément tubulaire (14) et sur laquelle agit l'embout (12) et une seconde partie (34) formant la soupape proprement dite montée coaxialement à la première partie (32), des moyens élastiques (42) étant prévus entre les première (32) et seconde (34) parties de la soupape,
**en ce que** les moyens élastiques (48) agissant pour fermer la soupape ont une raideur moindre par rapport aux moyens élastiques (42) placés entre les deux parties (32,34) de la soupape, et
**en ce que** des moyens de commande mécaniques (50), qui sont manoeuvrés depuis l'extérieur, du dispositif, sont prévus pour déplacer la seconde partie de la soupape vers la première partie de façon à assurer la fermeture de la soupape.

2. Dispositif de connexion rapide selon la revendication 1, **caractérisé en ce que** les moyens élastiques (42,48) sont des ressorts hélicoïdaux.

3. Dispositif de connexion rapide selon l'une des revendications 1 à 2, **caractérisé en ce que** la seconde partie (34) de la soupape présente une forme cylindrique tubulaire fermée à une extrémité et **en ce que** la première partie (32) de la soupape coulisse à l'intérieur de la seconde partie (34) de la soupape, le bord libre circulaire de la seconde partie de la soupape coopérant avec un siège de soupape (36) solidaire de l'élément tubulaire (14).

4. Dispositif de connexion rapide selon l'une des revendications 1 à 3, **caractérisé en ce que** la première partie (32) de la soupape présente une forme cylindrique comportant des lumières (38) dans sa paroi, coulisse dans l'élément tubulaire (14) et dans la seconde partie (34) de la soupape.

5. Dispositif de connexion rapide selon l'une des revendications 1 à 4, **caractérisé en ce que** les moyens de commande mécaniques comportent une came (50) pivotant autour d'un axe perpendiculaire à la direction de déplacement de la soupape.

6. Dispositif de connexion rapide selon l'une des revendications 1 à 5, **caractérisé en ce qu'**il comporte en outre un dispositif d'encliquetage (16,18,20,22) pour maintenir l'embout (12) de tuyau connecté.

7. Dispositif de connexion rapide selon la revendication 6, **caractérisé en ce que** le dispositif d'encliquetage comporte une bague extérieure (16) coulissant sur l'élément tubulaire (14), précontrainte par un ressort (24) et une cage (18) dans laquelle sont placées des billes (22), ainsi qu'une bague interne (20) coulissante par rapport à l'élément tubulaire (14) et dont la position est commandée par l'introduction ou le retrait de l'embout (12).

8. Dispositif de connexion rapide selon la revendication 7, **caractérisé en ce qu'**un mécanisme à baïonnette (26) permet le verrouillage de la bague extérieure (16).

9. Dispositif de connexion rapide selon l'une des revendications 1 à 8, **caractérisé en ce qu'**il comporte en outre un boîtier (2) destiné à être fixé à une paroi.

## Claims

1. Quick-acting connecting device having a tubular element (14) intended to receive the tip (12) of a pipe or the like which is to be connected, and a valve (32, 34) which is prestressed by elastic means (48) into the closed position and whose displacement is controlled by the introduction of the tip (12) of the pipe into, and its withdrawal from, the tubular element (14),
**characterised in that** the valve has two parts, a first part (32) which slides within the tubular element (14) and on which the tip (12) acts, and a second part (34) which forms the actual valve and is mounted coaxially with the first part (32), elastic means (42) being provided between the first (32) and second (34) parts of the valve,
**in that** the elastic means (48) which operate for the purpose of closing the valve have a lower stiffness compared with the elastic means (42) located between the two parts (32, 34) of the valve, and
**in that** mechanical control means (50), which are operated from the outside of the device, are provided for the purpose of displacing the second part of the valve towards the first part, so as to ensure closure of the valve.

2. Quick-acting connecting device according to claim 1, **characterised in that** the elastic means (42, 48) are helical springs.

3. Quick-acting connecting device according to one of claims 1 to 2, **characterised in that** the second part (34) of the valve has a tubular cylindrical shape which is closed at one end, and **in that** the first part (32) of the valve slides inside the second part (34) of the said valve, the circular free rim of the second part of the valve cooperating with a valve seat (36) which is integral with the tubular element (14).

4. Quick-acting connecting device according to one of claims 1 to 3, **characterised in that** the first part (32) of the valve has a cylindrical shape having apertures (38) in its wall, and slides within the tubular element (14) and within the second part (34) of the valve.

5. Quick-acting connecting device according to one of claims 1 to 4, **characterised in that** the mechanical control means have a cam (50) which pivots about an axis perpendicular to the direction of displacement of the valve.

6. Quick-acting connecting device according to one of claims 1 to 5, **characterised in that** it also has a latching device (16, 18, 20, 22) for the purpose of keeping the tip (12) of the pipe connected.

7. Quick-acting connecting device according to claim 6, **characterised in that** the latching device has an outer ring (16) which slides on the tubular element (14) and is prestressed by a spring (24), and a cage (18) in which balls (22) are located, as well as an internal ring (20) which slides in relation to the tubular element (14) and whose position is controlled by the introduction or withdrawal of the tip (12).

8. Quick-acting connecting device according to claim 7, **characterised in that** a bayonet mechanism (26) permits the locking of the outer ring (16).

9. Quick-acting connecting device according to one of claims 1 to 8, **characterised in that** it also has a casing (2) which is intended to be fixed to a wall.

## Patentansprüche

1. Schnellkupplungsvorrichtung umfassend ein röhrenförmiges Element, (14) das dazu bestimmt ist, einen Ansatz (12) eines anzuschließenden Rohrs oder ähnlichem aufzunehmen, und ein Ventil (32, 34), das bei geschlossener Position durch elastische Mittel (48) vorgespannt ist und dessen Verschiebung durch das Einführen und das Zurückziehen des Rohransatzes (12) in das röhrenförmige Element (14) gesteuert wird,
**dadurch gekennzeichnet, dass** das Ventil zwei Teile umfasst, nämlich einen ersten Teil (32), der im röhrenförmigen Element (14) verschiebbar ist, und auf welchen der Ansatz (12) wirkt, und einen zweiten Teil (34), der das eigentliche Ventil bildet und koaxial am ersten Teil (32) angebracht ist, wobei elastische Mittel (42) zwischen dem ersten (32) und dem zweiten (34) Teil des Ventils vorgesehen sind,
dass die elastischen Mittel (48) zum Schließen des Ventils einen bezüglich der zwischen den Teilen (32, 34) des Ventils angeordneten elastischen Mittel (42) eine geringere Härte haben, und
dass die mechanischen Steuermittel (50), die von außerhalb der Vorrichtung betätigt werden, dafür vorgesehen sind, den zweiten Teil des Ventils zum ersten Teil zu verlagern, um das Schließen des Ventils zu gewährleisten.

2. Schnellkupplungsvorrichtung nach Anspruch 1,
**dadurch gekennzeichnet, dass** die elastischen Mittel (42, 48) spiralförmige Federn sind.

3. Schnellkupplungsvorrichtung nach einem der Ansprüche 1 bis 2, **dadurch gekennzeichnet, dass** der zweite Teil (34) des Ventils eine zylindrische, röhrenförmige, an einem Ende geschlossene Form aufweist, und dass der erste Teil (32) des Ventils im Inneren des zweiten Teils (34) des Ventils gleitet, wobei der freie kreisförmige Rand des zweiten Teils des Ventils mit einem Ventilsitz (36) zusammenwirkt, der fest mit dem röhrenförmigen Element (14) verbunden ist.

4. Schnellkupplungsvorrichtung nach einem der Ansprüche 1 bis 3, **dadurch gekennzeichnet, dass** der erste Teil (32) des Ventils eine zylindrische Form aufweist, die Löcher (38) in ihrer Wand aufweist, und im röhrenförmigen Element (14) und im zweiten Teil (34) des Ventils gleitet.

5. Schnellkupplungsvorrichtung nach einem der Ansprüche 1 bis 4, **dadurch gekennzeichnet, dass** die mechanischen Steuerungsmittel eine Nocke (50) umfassen, die um eine orthogonale Achse in Richtung der Verlagerung des Ventils drehbar ist.

6. Schnellkupplungsvorrichtung nach einem der Ansprüche 1 bis 5, **dadurch gekennzeichnet, dass** sie weiterhin eine Einrastvorrichtung (16, 18, 20, 22) umfasst, um den Rohransatz (12) verbunden zu halten.

7. Schnellkupplungsvorrichtung nach Anspruch 6,
**dadurch gekennzeichnet, dass** die Einrastvorrichtung einen äußeren Ring (16) umfasst, der auf dem röhrenförmigen Element (14) verschiebbar ist, durch eine Feder (24) vorgespannt ist, einen Käfig (18), in dem Kugeln (22) angeordnet sind, sowie einen inneren Ring (20), der in Bezug auf das röhrenförmige Element (14) verschiebbar ist und dessen Position durch das Einführen oder Zurückziehen des Ansatzes (12) gesteuert wird.

8. Schnellkupplungsvorrichtung nach Anspruch 7,
**dadurch gekennzeichnet, dass** ein Bajonettmechanismus (26) das Verblocken des äußeren Rings (16) erlaubt.

9. Schnellkupplungsvorrichtung nach einem der Ansprüche 1 bis 8,
**dadurch gekennzeichnet, dass** sie weiterhin ein Gehäuse (2) umfasst, das dazu bestimmt ist, an einer Wand festgemacht zu werden.
